Europäisches Patentamt

(19) European Patent Office

Office européen des brevets

(11) Publication number: **0 089 141**
**B1**

(12) **EUROPEAN PATENT SPECIFICATION**

(45) Date of publication of patent specification: **30.12.86**

(51) Int. Cl.⁴: **C 25 B 1/04, C 25 B 11/04**

(21) Application number: **83301102.6**

(22) Date of filing: **02.03.83**

(54) **Process for the electrolytic production of hydrogen.**

(30) Priority: **15.03.82 US 357986**

(43) Date of publication of application:
**21.09.83 Bulletin 83/38**

(45) Publication of the grant of the patent:
**30.12.86 Bulletin 86/52**

(84) Designated Contracting States:
**CH DE FR GB IT LI SE**

(56) References cited:
**AT-B- 343 147**
**US-A-4 004 943**
**US-A-4 048 407**
**US-A-4 107 395**

(73) Proprietor: **Inco Alloys International, Inc.**
**Huntington West Virginia 25720 (US)**

(72) Inventor: **Hall, Dale Edward**
**14 Midoaks Street**
**Monroe, NY 10950 (US)**
Inventor: **Arms, John Taylor**
**12 Hofman Drive**
**Monroe, NY 10950 (US)**
Inventor: **Clark, William Donald Kennedy**
**19 Park Avenue**
**Warwick, NY 10990 (US)**
Inventor: **Shepard, Vance R., Jr.**
**257 Spook Rock Road**
**Suffern, NY 10901 (US)**

(74) Representative: **Greenstreet, Cyril Henry**
**Haseltine Lake & Co. Hazlitt House 28**
**Southampton Buildings Chancery Lane**
**London WC2A 1AT (GB)**

Courier Press, Leamington Spa, England.

## Description

This invention relates to the electrolytic production of hydrogen by the electrolysis of aqueous alkali and alkaline chloride solutions.

It is well known that passage of direct current between an anode and a cathode in an aqueous solution of an electrolyte containing no ions more readily electrodepositable than hydrogen will result in the production of gaseous hydrogen at the cathode. Industrially, hydrogen is produced by electrolysis of alkaline solutions such as aqueous solutions of potassium hydroxide, sodium hydroxide, alkaline sodium chloride and the like. One of the main features of such electrolyses which determines to a great part the efficiency of the electrolysis process is the selection of electrode materials, both anode and cathode, to provide in a practical manner the lowest overpotential for the electrochemical processes occurring at those electrodes. The present invention is concerned with the cathodic process of releasing gaseous hydrogen at the cathode. In the past it has been conventional to use iron, nickel, cobalt or alloys of these metals as cathodes because, in physical forms available for cathode structures, these metals are capable of giving overpotentials as low as about 300 mV when operated at commercially useful cathode current densities of about 200 mA/cm². While other group VIII metals, notably platinum, are capable of exhibiting much lower overpotentials for release of hydrogen, precious metals of the group VIII class are too expensive for use in normal commercial installations.

In order to lower the cathodic overpotential it has been proposed in AT—B—343 147 to employ cathodes comprising a binary compound or alloy of nickel, cobalt or iron with titanium, a lanthanide, magnesium or boron. The compound or alloy may be made by melting or sintering the constituents. It may be used alone or applied to a support, e.g. of iron, in any suitable way, e.g. by plasma spraying, cathodic sputtering, vacuum metallisation or explosive deposition of a mixture of the ground constituents. An intermediate layer of binder may be interposed between the coating and the support provided it does not appreciably reduce the conductivity. The proportions of the constituents of the compound or alloy may vary within wide ranges. Alloys of nickel and titanium are said to be preferred, but alloys or compounds of nickel and magnesium, nickel and boron, and iron and boron are also disclosed as examples.

We have now found that it is advantageous to use a cathode that contains as the essential cathode active material a hydrided alloy having the structure of an intermetallic compound of the formula $AB_5$, wherein A is rare earth metal, calcium, or two or more thereof and B is principally nickel or cobalt or both, the alloy being in the form of fine particles bonded by a metallic or electrically conductive plastic binder.

According to the invention, therefore, a process for the electrolytic production of hydrogen comprises electrolytically generating hydrogen at, and recovering it as gas from, the interface of an aqueous alkali or alkaline chloride solution and a cathode that comprises a hydrogenated species of an alloy made up of A and B and including an $AB_5$ phase, A being rare earth metal or calcium, or two or more of these elements, and B being nickel, cobalt or both, said $AB_5$ phase amounting to at least 30% by weight of the cathode and said alloy being in the form of fine particles bonded by a metallic or electrically conductive plastic binder.

Another aspect of the invention is the use in a process for electrolytically generating hydrogen gas at, and recovering it from, the interface of an aqueous alkali or alkaline chloride solution of a cathode produced by converting an alloy made up of A and B and including an $AB_5$ phase, A being a rare earth metal or calcium, or two or more of these elements, of which up to 0.2 atoms in total may be replaced atom for atom by one or both of zirconium and thorium, and B being nickel, cobalt or both, of which up to 1.5 atoms in total may be replaced atom for atom by one or more of copper, aluminium, tin, iron and chromium, into a fine powder of particle size not exceeding 20 μm by alternately hydriding and dehydriding, and bonding the fine powder particles together by means of a metallic or electrically conductive plastic binder to form a cathode comprising at least 30% by weight of the $AB_5$ phase.

It is important to use fine particles in order to ensure stability of the cathode structure, and preferably the particle size does not exceed 20 μm (micrometres).

The structures of typical cathodes used in the process of the invention are shown in the accompanying drawings, which are reproductions of photomicrographs and in which:

Figures 1A and 1B depict at a magnification of ×1000 a pressed and sintered mixture of 50% by weight nickel powder and 50% $LaNi_{4.7}Al_{0.3}$ prior to electrolysis and after 24 hours of electrolysis, respectively;

Figures 2A and 2B depict at a magnification of ×1000 a similar sintered mixture in which a polysilicate binder was employed, Figure 2A showing material prior to electrolysis and Figure 2B showing cathode material after about 170 hours of electrolysis; and

Figures 3A and 3B depict at a magnification of ×3000 a plastic bonded electrode prior to electrolysis and after 6 hours of electrolysis, respectively.

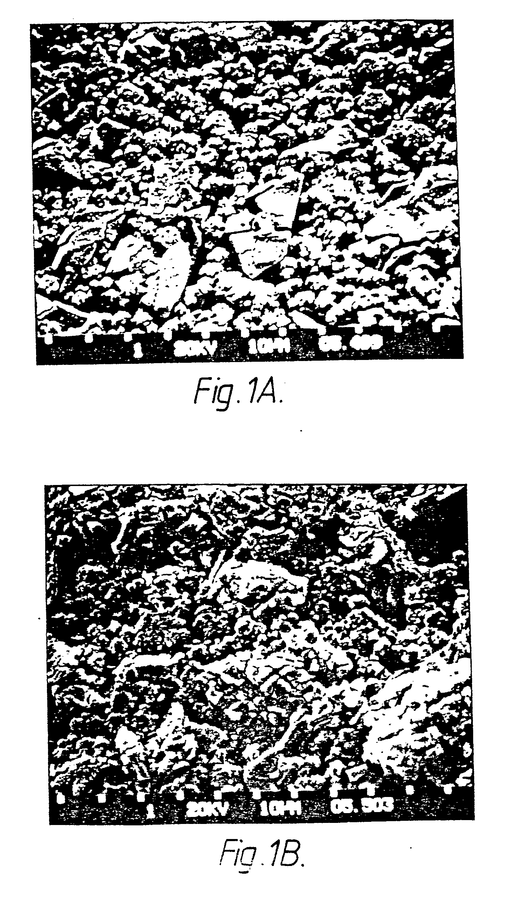

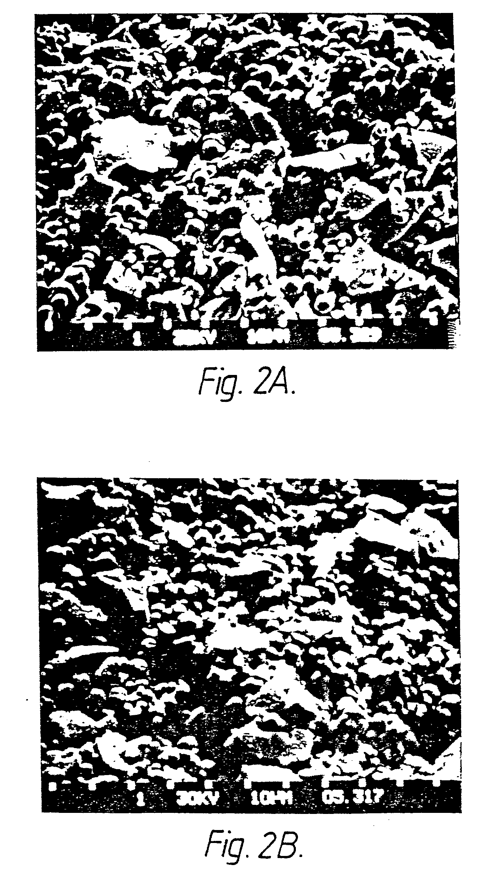

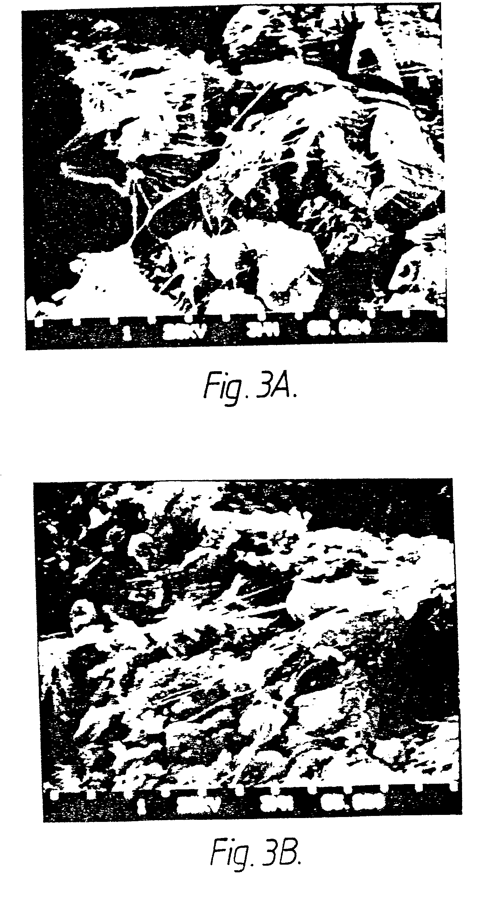

The photomicrographs in Figures 1B, 2B and 3B show the structures after dehydriding. Comparison of these Figures with the corresponding A Figures show that the structures remain stable after prolonged electrolysis, although some microcracking of individual particles of the composition of A and B has occurred.

Materials having the structure $AB_5$ are known to form compounds with hydrogen (see U.S. Patents Nos. 4,161,401; 4,161,402; 4,152,145; 4,222,770; 4,242,315; 4,249,940; 3,793,435; 3,825,418; 4,142,300). The hydrogen compounds are, in fact, those materials which are actually present in the cathode when hydrogen is evolving. For example, a cathode made with $LaNi_5$ will actually contain $LaNi_5H_x$, where x is a

2

number between perhaps 4 and 8, during hydrogen evolution from such a cathode. It is also known that hydrogen storage materials such as $LaNi_5$ can be used as electrodes in secondary batteries (see U.S. Patent Nos. 3,520,728; 3,669,745; 3,874,928; 3,881,960; 3,980,501; 4,004,943; 4,025,412; 4,048,407; 4,107,395). Thus, US—A—4,048,407 discloses the use of an electrode for a primary or secondary battery comprising a porous metal support provided with a porous sintered layer of a powder of an intermetallic compound which can absorb and release reversible hydrogen, in particular $LaNi_5$ or $LaNi_4Cu$. However, as far as we are aware, it has not been the intention with these batteries that hydrogen be evolved and collected from the battery electrodes. Nor, as far as we are aware, has the art disclosed any advantage for release of hydrogen from such hydride electrodes.

As those skilled in the metallurgical art will appreciate, an intermetallic structure such as $AB_5$ will persist at chemistries significantly varying from the exact $AB_5$ stoichiometry. In this regard reference is made to the La/Ni phase diagram which shows $LaNi_5$ existing in association with $La_2Ni_{17}$ from about 78 to 83 atomic percent (A/o) nickel and in association with nickel at atomic percentages of nickel higher than about 83.5 and approaching 100 A/o nickel. (See Journal of the Less Common Metals, Vol. 29 (1972) p. 203 at 206). Thus, for the purposes of the present invention, the composition of cathode materials useful in the hydrogen production process can vary from about $AB_4$ to $AB_8$, or even wider, so long as the cathode as made contains a significant amount, for example at least about 30% by weight, of the $AB_5$ hydridable structure.

With respect to the component A of the $AB_5$ structure, one or both of the metals zirconium and thorium can replace up to about 20 A/o of rare earth metal on an atom-for-atom basis. With respect to the B component, one or more of the metals aluminium, copper, tin, iron, and chromium can substitute on an atom-for-atom basis for up to about 1.5 of the 5 atoms of nickel or cobalt in the $AB_5$ compound. Cobalt and nickel are equivalents for purposes of the invention. However, cobalt-rich compounds such as $SmCo_5$ are not ordinarily used because of cost.

We prefer to use as the $AB_5$ phase compounds of lanthanum or other rare earth metal with nickel, or with nickel in which up to 1.5 of the 5 atoms is replaced by chromium or copper, or a compound essentially of the composition $CaNi_5$.

Rare earths used in the $AB_5$ compound in preparing cathodes for use in the process of the present invention are conveniently in the form of relatively inexpensive mixtures such as mischmetal (M) or cerium-free mischmetal (CFM). Compositions in weight percent, of commonly available grades of these mixtures are set forth in Table I.

TABLE I

| Element | M | CFM |
|---|---|---|
| Ce | 48—50 | about 0.8 |
| La | 32—34 | about 61.6 |
| Pr | 4—5 | about 9.2 |
| Nd | 13—14 | about 28.5 |

In making cathodes for use in the process of the present invention, the $AB_5$ material may conveniently be reduced to a fine powder not exceeding 20 μm in particle size (e.g. 5—20 μm) by subjecting $AB_5$ metal granules to one or more hydriding-dehydriding cycles. As is well known in the metal hydride art (see for example Philips Res. Reports 25, 133—140, 1970), rare earth-nickel $AB_5$ compounds will absorb large amounts of hydrogen at any given temperature over the operating range of the specific compound provided hydrogen is present at a minimum pressure known as the "plateau pressure". Initial hydriding may require significantly higher hydrogen pressures than the "plateau pressure" to initiate pickup of hydrogen. Once hydriding starts, metal granules of $AB_5$ tend to increase somewhat in volume due to hydrogen absorption and become microcracked. If dehydriding follows the hydriding (carried out by lowering the hydriding pressure below the "plateau pressure") a second and subsequent hydriding operation will occur at or around the "plateau pressure" and the original granular metal structure will be replaced through continuous microcracking by the fine powder metal form mentioned hereinbefore.

The fine powder particles are then bonded together in any convenient way by means of an electrically conductive plastic binder or by metallurgical bonding (sintering) with a metallic binder to form the cathode structure *per se* or as a coating bonded on a cathode substrate.

Our preferred plastic binder is fibrillated polytetrafluoroethylene (PTFE). Plastic bonding of finely powdered $AB_5$ alloy may be effected, for example, by blending it with shear along with finely divided carbon black to render the binder electrically conductive, a thermoplastic water-soluble resin (e.g. polyethylene oxide) and a support polymer (e.g. polyethylene).

The blended material is then formed into an electrode shape, with or without a metallic current distributor, and then leached in water to remove the water-soluble resin. In forming the plastic bonded electrode around a metallic current distributor one can employ any conventional technique employed for

3

plastic coating of metal. For example, one can grind the compounded material containing water-soluble resin to a fine powder and coat the metal current distributor by slurry or electrostatic means. In these cases after any carrier is volatilised, the fine particles are subjected to a heating operation on the metallic support to melt the resins and form a consolidated coating. Alternatively, the fine particles of compounded material can be fluidised, the metal support can be heated and the heated support dipped into the fluidised plastic compounded material. Upon contact the plastic bonded particles will melt and adhere to the metal substrate. In each case, after coating has taken place and the coating is consolidated by the heating operation, the water-soluble resin is leached from the compounded material.

Typical mixtures, in percent by weight, for forming plastic bonded cathodes are set forth in Table II.

TABLE II

| Component | Range, wt.% | Optimum, wt.% |
|---|---|---|
| PTFE | 1—4 | 1—2 |
| Polyethylene | 0—4 | 0—2 |
| Carbon black | 1—5 | 2—3 |
| Polyethylene oxide | 7—15 | 8—10 |
| Electrocatalyst powder | Bal | Bal |

Other support polymers that may be used in place of polyethylene include other polyolefins, aromatic polymers (e.g. polystyrene), or halogen-substituted polymers, e.g. polyvinyl chloride, and other water-soluble resins that may replace polyethylene oxide are polyvinyl alcohol, polyacrylic acid, sulphonated polystyrene and N, polyvinyl pyrrolidone.

It is to be observed that although water-soluble resins are employed in compositions in Table II, such resins can be replaced by other resins which can be selectively dissolved away from the polyethylene or other support polymer. For example, natural shellac, soluble in ethanol, could be used as a selectively soluble resin with polyethylene. When formulating a composition within the ranges set forth in Table II, one should take care to provide sufficient shear-inducing mechanical work to fibrillate the PTFE. The carbon black employed should be an electroconductive grade with a fibrous structure, and in blending carbon black into the cathode mixture, care should be taken not to perform so much mechanical work that the fibrous structure of the black is broken down and the conductive character of the black is destroyed.

Within the compositional limits set forth in Table II the total polymer content of the mixture is preferably from 8 to 15 weight percent. At higher polymer contents, the electrical conductivity of the finished electrode is lower. With less polymer, the mixture does not blend and flow properly, and subsequent pressing is adversely affected.

To obtain an electrode structure with adequate mechanical strength, it is essential to work the mixture, e.g. by grinding it in a motorised mortar and pestle, so as to fibrillate the PTFE. It may then be further worked under pressure to a homogeneous mixture in sheet form, and electrode blanks cut from the sheets laminated by pressing with nickel screen or other foraminous nickel or steel material, which imparts strength to the finished electrode and also serves as a current collector. Finally the water-soluble polymer is leached from the cathode by soaking in water, and the cathode is dried and pressed between two fine metal screens. Pressures are suitably from $7.66 \times 10^5$ to $1.53 \times 10^6$ Pa, and this final pressing may be carried out at 120°C if the electrode contains both PTFE and polyethylene; or at 177°C when no polyethylene or equivalent thermoplastic material is used.

In some instances, electrodes can be improved by being preconditioned electrolytically. To do this, the cathodes are charged, i.e. hydrogen is generated and incorporated into the electrocatalyst. This produces $AB_5H_y$, where y is most probably a number in the range of 6—7. The cathodes are then discharged, i.e. the hydrogen in the electrocatalyst is released and electrochemically oxidised to water at the cathode surface. This preconditioning sometimes results in lower hydrogen evolution overpotentials during subsequent operation. In the bulk of instances however, no advantage is seen in electrolytic preconditioning.

Cathode structures useful in the process of the present invention can also be made by metallurgical bonding using about 30% to about 70% by weight of finely powdered $AB_5$ alloy made as described hereinbefore with the balance being bonding metal resistant to an aqueous alkali or alkaline chloride electrolyte. For most practical purposes, the bonding metal will be finely powdered iron or nickel or alloys or mixtures of these metals alone or with cobalt. In certain instances, one might use platinum group metals or chromium alone or along with powdered iron or nickel. However, because of the expense of these materials and the difficulty in sintering chromium, it is not likely that significant use of these metals will occur. Except for minor alloying quantities used in iron or nickel bonding materials, one should avoid metals such as copper, aluminium, zinc and tin for metallurgical bonding of $AB_5$ cathode material.

When iron, nickel and iron-nickel alloys and mixtures are used as the bonding metal, the mixed $AB_5$-bonding metal material, along with or without aqueous silica sol binder, is subjected (after binder drying and/or pressing, if necessary) to a sintering operation which conveniently is carried out in a protective atmosphere, e.g. hydrogen, cracked ammonia or inert gas, at temperature/time conditions varying from about 1 hour at 760°C to about 5 to about 10 minutes at 900°C. Sintering temperatures above about 950°C should be avoided. Generally, it has been observed that sintering for the shortest time at the lowest practical temperature is most advantageous. Excellent results have been obtained by sintering at 800°C for about 10 minutes in a hydrogen or cracked ammonia atmosphere. While these conditions have been established for bonding with fine, nickel powder (nickel powder grade 123 Inco Ltd.) and may vary somewhat when using iron or iron-nickel alloys or mixtures, the basic criterion of a satisfactory sintering operation is a relatively strong particle-to-particle bond while retaining the identity of the $AB_5$ material. Sintering should not be carried out for such times and at such temperatures that excessive diffusion of nickel or iron into the $AB_5$ structure occurs. Those skilled in the art will readily appreciate the strength-composition balance which must be retained and will be able, with minor amount of testing, to determine optimum sintering conditions for any $AB_5$-bonding metal composition.

The electrolysis may be performed using aqueous alkali or alkaline chloride electrolytes, and at a cathode current densities (based on the gross, apparent surface area of the cathode) of at least 100 mA/cm², and a temperature of at least 60°C.

By way of example, cathodes constructed as set forth and described in the following examples were employed in a process in accordance with the present invention. In this process, hydrogen was electrolytically evolved at and collected from a cathode surface in an aqueous alkaline electrolyte containing 30% by weight of KOH maintained at a temperature of 80°C. Nickel was employed as the anode and the cathode current density was uniformly 200 mA/cm² based upon the gross, apparent surface area of the cathode. Results were obtained in terms of overpotential ($\eta$) based upon measurement of potential difference between the active, hydrogen-evolving cathode and a saturated calomel or mercury/mercuric oxide reference electrode with computer correction of the observed data to account for resistive effects in the measuring circuit.

Example 1

A plastic bonded hydrogen evolution cathode was prepared from a blend of the following ingredients.

| Component | Particle size | Wt. % |
|---|---|---|
| $LaNi_{4.7}Al_{0.3}$ | <44 μm | 86 |
| PTFE | 35 μm | 1 |
| Polyethylene | 20 μm | 2 |
| Carbon black | | 3 |
| Polyethylene oxide | | 8 |

The blend was ground for about one hour in a mortar and pestle to fibrillate the PTFE. The mixture was then worked at about 120°C under pressures of up to 4.6×10⁶ Pa until a homogenous mixture in sheet form resulted.

Electrode blanks cut from the sheets were laminated with nickel screen by pressing at 2.23×10⁷ Pa at 120°C.

The water-soluble polymer was leached from the cathode by soaking in water for about 24 hours. The cathode was then dried and pressed at 120°C between two fine metal screens at 7.66×10⁵ −1.53×10⁶ Pa. After preconditioning, the cathode was used to evolve hydrogen in 30 w/o KOH (aqueous) electrolyte at 80°C. The cathode current density was 200 mA/cm². After 6 hours of continuous electrolysis, a cathode overpotential of 95 mV was measured. This measured value contained a small potential component due to uncompensated resistance losses in the measuring circuit.

Example 2

Using the procedure described in Example 1, a hydrogen evolution cathode was made from the following mixture:

| Component | Particle size | Wt. % |
|---|---|---|
| $LaNi_{4.7}Al_{0.3}$ | <0.44 μm | 86 |
| PTFE | 35 μm | 2 |
| Polyethylene oxide | | 10 |
| Carbon black | | 2 |

Final pressing was at 177°C at a pressure of $7.66 \times 10^5$ Pa. After preconditioning, the cathode was used to evolve hydrogen as in Example 1. After 6 hours of continuous electrolysis, a cathode overpotential of 132 mV at 200 mA/cm² was measured. The measured value included a potential component due to resistance losses in the measuring circuit.

Example 3

Using the procedure described in Example 1, a hydrogen evolution cathode was made from the following mixture:

| Component | Particle size | Wt. % |
|---|---|---|
| $LaNi_{4.7}Al_{0.3}$ | <0.44 μm | 86 |
| PTFE | 35 μm | 1 |
| Polyethylene | 20 μm | 2 |
| Carbon black | | 3 |
| Polyethylene oxide | | 8 |

Final pressing was at 120°C at a pressure of $1.15 \times 10^6$ Pa. The cathode was used without preconditioning to evolve hydrogen in 30 w/o KOH (aqueous) electrolyte at 80°C; the cathode current density was 200 mA/cm². At the start of electrolysis a relatively high overpotential for the evolution of hydrogen was noted. After a few hours of operation, this overpotential dropped and, after more than 1400 hours of continuous electrolysis, a cathode overpotential of 258 mV was measured. After correcting for uncompensated resistance losses in the measuring circuit, the overpotential was 70 mV.

Examples 4 to 7

Hydrogen evolution cathodes were made by pressing mixed $LaNi_{4.7}Al_{0.3}$ (40—70 w/o) and type 123 nickel powders at about $4.22 \times 10^9$ dynes/cm². The electrodes were then sintered under a hydrogen atmosphere for 10 minutes at 900°C. The results of the electrochemical experiments are given in Table III.

Example 8

A hydrogen evolution cathode was made by applying a porous sintered coating of $LaNi_{4.5}Al_{0.5}$ (50%) and Type 123 nickel powders to mild steel screen. After more than 170 hours of continuous electrolysis at 200 mA/cm², a cathode overpotential of 191 mV was measured. Correction for uncompensated resistance losses in the measuring circuit revealed an overpotential of 102 mV.

Examples 9, 10 and 11

Using procedures described in Example 3, plastic-bonded hydrogen evolution cathodes were made using the following mixture.

| Component | Particle size | Wt. % |
|---|---|---|
| Hydridable alloy | <0.44 μm | 86 |
| PTFE | 35 μm | 1 |
| Polyethylene | 20 μm | 2 |
| Carbon black | | 3 |
| Polyethylene oxide | | 8 |

After 6 hours of continuous electrolysis at 200 mA/cm², the following results were observed:

| Ex. No. | Hydridable alloy | Measured overpotential | Corrected overpotential |
|---|---|---|---|
| 9 | $LaNi_3Co_2$ | 96 mV | 43 mV |
| 10 | $LaNi_4Cu$ | 130 mV | 46 mV |
| 11 | $CaNi_5$ | 232 mV | 80 mV |

Example 12

Hydrogen evolution cathodes were made by mixing various proportions of $LaNi_{4.7}Al_{0.3}$ with nickel 123 powder and incorporating these mixtures into a slurry containing a polysilicate material as a water dispersible binder. The polysilicate slurries contained, in parts by weight, per 100 parts of total nickel plus $LaNi_{4.7}Al_{0.3}$, the following ingredients:

| | |
|---|---|
| Water | 39.1 |
| Xanthan gum | 0.35 |
| Polysilicate | 7.00 |

The various slurries were coated on to pieces of screen grossly 4.4 cm$^2$ in area on one side. The coating was by dipping and, after coating, interstices of the screen were open.

Once coated, the screens were dried and then subjected to sintering. Electrochemical testing of the coated and sintered screens as cathodes gave the results set forth in Table IV.

TABLE III

| Ex. No. | Mixture | Hrs. of Continuous electrolysis (200 mA/cm$^2$) | Measured η | Corrected η |
|---|---|---|---|---|
| 4 | 60% Ni 123-40%$LaNi_{4.7}Al_{0.3}$ | 47.0 | 118 mV | 96 mV |
| 5 | 50% Ni 123-50%$LaNi_{4.7}Al_{0.3}$ | 28.5 | 136 mV | 86 mV |
| 6 | 40% Ni 123-60%$LaNi_{4.7}Al_{0.3}$ | 72.0 | 97 mV | 81 mV |
| 7 | 30% Ni 123-70%$LaNi_{4.7}Al_{0.3}$ | 51.0 | 123 mV | 77 mV |

TABLE IV

| Electrode %LaNi$_{4.7}$Al$_{0.3}$ | Weight of coating metal (g) | Electrolysis time hrs. | Overpotential at 200 mA/cm$^2$ (uncorrected) mV | Overpotential (mV) computer corrected* | | |
|---|---|---|---|---|---|---|
| | | | | 1-200 mA/cm$^2$ | 10-200 mA/cm$^2$ | 10-600 mA/cm$^2$ |
| Sintering temperature (800°C) | | | | | | |
| 70 | 0.6079 | 23 | 129 | 64 (0.960) | 68 (0.962) | 77 (0.961) |
| 60 | 0.7330 | 23 | 128 | 79 (0.963) | 80 (0.984) | 86 (0.961) |
| 50 | 0.5168 | 23 | 157 | 79 (0.990) | 81 (0.991) | 94 (0.935) |
| 40 | 0.6318 | 71 | 124 | 73 (0.970) | 75 (0.991) | 73 (0.980) |
| 30 | 0.4300 | 23 | 346 | 216 (0.931) | 285 (0.992) | 321 (0.994) |
| Sintering temperature (900°C) | | | | | | |
| 70 | 0.5028 | 23 | 183 | 74 (0.985) | 73 (0.975) | 80 (0.837) |
| 60 | 0.5675 | 23 | 173 | 78 (0.960) | 80 (0.964) | 89 (0.933) |
| 50 | 0.6359 | 23 | 136 | 70 (0.942) | 74 (0.946) | 87 (0.942) |
| 40 | 0.7033 | 71 | 271 | 116 (0.948) | 134 (0.948) | 207 (0.970) |
| 30 | 0.7305 | 23 | 390 | 366 (0.988) | — | 381 (0.999) |

**Claims**

1. A process comprising electrolytically generating hydrogen gas at, and recovering it from, the interface of an aqueous alkali or alkaline chloride solution and a cathode, wherein the cathode comprises a hydrogenated species of an alloy made up of A and B and including an $AB_5$ phase, A being a rare earth metal or calcium, or two or more of these elements, of which up to 0.2 atoms in total may be replaced atom for atom by one or both of zirconium and thorium, and B being nickel, cobalt or both, of which up to 1.5 atoms in total may be replaced atom for atom by one or more of copper, aluminium, tin, iron and chromium, said $AB_5$ phase amounting to at least 30% by weight of the cathode and said alloy being in the form of fine particles bonded by a metallic or electrically conductive plastic binder.

2. A process according to claim 1 in which the size of the particles does not exceed 20 μm.

3. A process according to claim 1 or claim 2 in which the $AB_5$ phase is a rare earth metal-nickel phase of which up to 1.5 atoms of the nickel are replaced by copper or aluminium.

4. A process according to claim 3 in which the rare earth metal is lanthanum.

5. A process according to claim 3 in which the $AB_5$ phase is essentially $LaNi_5$.

6. A process according to claim 1 or claim 2 in which the $AB_5$ phase is essentially $CaNi_5$.

7. A process according to any preceding claim in which the particles are bonded by sintering with nickel or iron powder.

8. A process according to any one of claims 1 to 6 in which the particles are bonded by a plastic binder which includes fibrillated polytetrafluoroethylene and is rendered electroconductive by the presence of carbon black.

9. A process according to any preceding claim in which the bonded alloy is in the form of a coating on a metallic current distributor.

10. A process according to any preceding claim in which the cathode current density (based on the gross, apparent surface area of the cathode) is at least 100 mA/cm$^2$ and the temperature is at least 60°C.

11. The use in a process for electrolytically generating hydrogen gas at, and recovering it from, the interface of an aqueous alkali or alkaline chloride solution of a cathode produced by converting an alloy made up of A and B and including an $AB_5$ phase, A being a rare earth metal or calcium, or two or more of these elements, of which up to 0.2 atoms in total may be replaced atom for atom by one or both of zirconium and thorium, and B being nickel, cobalt or both, of which up to 1.5 atoms in total may be replaced atom for atom by one or more of copper, aluminium, tin, iron and chromium, into a fine powder of particle size not exceeding 20 μm by alternately hydriding and dehydriding, and bonding the fine powder particles together by means of a metallic or electrically conductive plastic binder to form a cathode comprising at least 30% by weight of the $AB_5$ phase.

**Patentansprüche**

1. Verfahren zum elektrolytischen Gewinnen von Wasserstoffgas an und zum Entfernen von Wasserstoffgas von der Grenzfläche zwischen einer wässrigen Alkali- oder Alkalichlorid-Lösung und einer Kathode, dadurch gekennzeichnet, daß die Kathode eine feinteilige, mittels eines metallisch oder elektrisch leitenden Kunststoff-Bindemittels gebundene hydrierte Legierung AB mit mindestens 30% einer Phase $AB_5$, bezogen auf das Kathodengewicht, enthält, wobei A mindestens ein Seltenes Erdmetall und Kalzium, einzeln oder nebeneinander, ist die bis zu 0,2 Atomen insgesamt atomweise durch Zirkonium und/oder Thorium ersetzt sein können, und B nickel und/oder Kobalt ist, die bis zu 1,5 Atomen insgesamt atomweise durch Kupfer, Aluminium, Zinn, Eisen und Chrom, einzeln oder nebeneinander ersetzt sein können.

2. Verfahren nach Anspruch 1, dadurch gekennzeichnet, daß die Teilchengröße 20 μm nicht übersteigt.

3. Verfahren nach Anspruch 1 oder 2, dadurch gekennzeichnet, daß die $AB_5$-Phase aus einem Seltenen Erdmetall und Nickel besteht, das bis zu 1,5 Atomen durch Kupfer oder Aluminium ersetzt ist.

4. Verfahren nach Anspruch 3, dadurch gekennzeichnet, daß die $AB_5$-Phase Lanthan als Seltenes Erdmetall enthält.

5. Verfahren nach Anspruch 3, dadurch gekennzeichnet, daß die $AB_5$-Phase im wesentlichen aus $LaNi_5$ besteht.

6. Verfahren nach Anspruch 1 oder 2, dadurch gekennzeichnet, daß die $AB_5$-Phase im wesentlichen aus $CaNi_5$ besteht.

7. Verfahren nach einem der Ansprüche 1 bis 6, dadurch gekennzeichnet, daß die Legierungsteilchen mit Nickel- oder Eisenpulver versintert sind.

8. Verfahren nach einem der Ansprüche 1 bis 6, dadurch gekennzeichnet, daß die Legierungsteilchen in ein Bindemittel eingebettet sind, das Polytetrafluoräthylen-Fasern enthält und durch die Anwesenheit von Ruß elektrisch leitend ist.

9. Verfahren nach einem der Ansprüche 1 bis 8, dadurch gekennzeichnet, daß die gebundene Legierung einen Überzug auf einem metallischen Leiter bildet.

10. Verfahren nach einem der Ansprüche 1 bis 9, dadurch gekennzeichnet, daß die Kathodenstromdichte, bezogen auf die scheinbare Oberfläche der Kathode mindestens 100 mA/cm$^2$ und die Temperatur mindestens 60°C beträgt.

11. Verwendung einer Kathode zum elektrolytischen Gewinnen von Wasserstoffgas an und zum Entfernen von Wasserstoffgas von der Grenzfläche zwischen einer wässrigen Alkali- oder Alkalichlorid-Lösung und einer Kathode aus einer Legierung AB mit mindestens 30% einer Phase $AB_5$, bezogen auf das Kathodengewicht, wobei A mindestens ein Seltenes Erdmetall und Kalzium, einzeln oder nebeneinander, ist und bis zu 0.2 Atome insgesamt atomweise durch Zirkonium und/oder Thorium ersetzt sein können, und B Nickel und/oder Kobalt ist, die bis zu 1,5 Atome insgesamt atomweise durch Kupfer, Aluminium, Zinn, Eisen und Chrom, einzeln oder nebeneinander ersetzt sein können, deren Teilchengröße höchstens 20 µm beträgt und deren Teilchen abwechselnd hydriert und dehydriert sowie mittels eines metallisch oder elektrisch leitenden Kunststoff-Bindemittels gebunden sind.

**Revendications**

1. Procédé comprenant la génération électrolytique de gaz hydrogène à et sa récupération depuis, l'interface d'une solution aqueuse alcaline ou de chlorure alcalin et d'une cathode, dans lequel la cathode comprend une espèce hydrogénée d'un alliage constitué de A et B et incluant une phase $AB_5$, A étant un métal de terre rare ou le calcium, ou deux ou plus de ces éléments, dont jusqu'à 0,2 atome au total peut être remplacé, atome pour atome par l'un des éléments zirconium et thorium, ou par les deux à la fois, et B étant le nickel, cobalt ou les deux, dont jusqu'à 1,5 atome au total peut être remplacé, atome pour atome par un ou plusieurs des éléments cuivre, aluminium, étain, fer et chrome, cette phase $AB_5$ représentant au moins 30% en poids de la cathode et cet alliage étant sous la forme de fines particules liées par un liant métallique ou plastique conducteur électrique.

2. Procédé selon la revendication 1 dans lequel la taille des particules n'excède pas 20 µm.

3. Procédé selon la revendication 1 ou la revendication 2 dans lequel la phase $AB_5$ est une phase de nickel-métal de terre rare dont jusqu'à 1,5 atome de nickel est remplacé par du cuivre ou de l'aluminium.

4. Procédé selon la revendication 3 dans lequel le métal de terre rare est le lanthane.

5. Procédé selon la revendication 3 dans lequel la phase $AB_5$ est essentiellement $LaNi_5$.

6. Procédé selon la revendication 1 ou la revendication 2 dans lequel la phase $AB_5$ est essentiellement $CaNi_5$.

7. Procédé selon l'une quelconque des revendications précédentes dans lequel les particules sont liées par frittage avec de la poudre de nickel ou de fer.

8. Procédé selon l'une quelconque des revendications 1 à 6 dans lequel les particules sont liées par un liant plastique qui comprend du polytétrafluoroéthylène fibrillé et qui est rendu conducteur électrique par la présence de noir de carbone.

9. Procédé selon l'une quelconque des revendications précédentes dans lequel l'alliage lié est sous la forme d'un revêtement sur un distributeur métallique de courant.

10. Procédé selon l'une quelconque des revendications précédentes dans lequel la densité de courant de cathode (basée sur l'aire de la surface globale apparente de la cathode) est au moins de 100 mA/cm² et la température est au moins de 60°C.

11. Utilisation dans un procédé pour la génération électrolytique de gaz hydrogène à et sa récupération depuis, l'interface d'une solution aqueuse alcaline ou de chlorure alcalin et d'une cathode produite en convertissant un alliage constitué de A et B et comprenant une phase $AB_5$, A étant un métal de terre rare ou le calcium, ou deux ou plus de ces éléments dont jusqu'à 0,2 atome au total peut être remplacé, atome pour atome par l'un des éléments zirconium et thorium, ou par les deux à la fois, et B étant le nickel, le cobalt ou les deux, dont jusqu'à 1,5 atome au total peut être remplacé, atome pour atome par un ou plusieurs des éléments cuivre, aluminium, étain, fer et chrome, en une fine poudre de taille de particule ne dépassant pas 20 µm en hydrurant et déshydrurant alternativement, et en collant les fines particules de poudre ensemble au moyen d'un liant métallique ou plastique conducteur électrique pour former une cathode comprenant au moins 30% en poids de la phase $AB_5$.

Fig.1A.

Fig.1B.

Fig. 2A.

Fig. 2B.

Fig. 3A.

Fig. 3B.